# EUROPEAN PATENT APPLICATION

(11) **EP 4 707 526 A1**
(43) Date of publication of application: **11.03.2026**
(21) Application number: 25222898.6
(22) Date of filing: 09.02.2022
(51) Int. Cl.: E21B 17/042, F16H 55/08

(54) **AIR TREATMENT CARTRIDGE**

(62) Divisional of application: 22155836.4
(71) Applicant: KNORR-BREMSE Systeme für Nutzfahrzeuge GmbH, 80809 München (DE)
(72) Inventor: TOTH, Zoltan Laszlo, 6100 Kiskunfélegyháza (HU); OLAH, Tibor, 6000 Kecskemét (HU); POLYAK, Tibor, 6044 Hetényegyháza (HU); PALICSKA, Domonkos, 6000 Kecskemét (HU)

(57) **Abstract**

The invention relates to an air treatment cartridge (100), especially air dryer cartridge, for an air treatment device (200) for a vehicle, especially utility vehicle, comprising: a cartridge body (102) having a connecting portion (104) for connecting the air treatment cartridge (100) to the air treatment device (200), the connecting portion (104) being formed on the cartridge body (102) and having a leading end (106), a trailing end (108) opposite to the leading end (106), and a multi-start screw thread (110) formed between the leading end (106) and the trailing end (108), wherein each start of thread (112) of the multi-start screw thread (110) is offset to one another on the leading end (106) and/or the trailing end (108), and wherein the screw thread profile (22) has a first (22a) and a second flank (22b) which are asymmetric.

## Description

The present invention relates to an air treatment cartridge, especially air dryer cartridge, for an air treatment device for a vehicle, especially utility vehicle. In particular, the present invention relates to an air treatment cartridge for an air treatment device for a vehicle, especially utility vehicle, with a multi-start screw thread for establishing a connection between the air treatment cartridge and the air treatment device.

Further, the present invention relates to an air treatment device for a vehicle, especially utility vehicle, being connectable to an air treatment cartridge as mentioned above, and additionally relates to a system comprising an air treatment device as mentioned above and an air treatment cartridge as mentioned above.

In the field of vehicles and especially utility vehicles, usually pneumatic systems are used for brakes, suspension and other auxiliary systems. The necessary compressed air is delivered by a compressor. An air supply system is typically equipped with an air treatment device such as an air dryer unit, which serves to decrease the water content of the air delivered by the compressor.

Typically, cartridges can be connected to the system, in particular to the air treatment device for air treatment, during an assembly process. For example, an air dryer cartridge such as a desiccant cartridge can be used. To connect the system and the cartridge, threaded connection elements are used, which can be screwed into each other. In usual designs, a single-start screw thread can be used to secure compatibility and simple combination of different types of connection elements during the assembly process.

In this regard, different types of cartridges can be used for different applications. One challenge is to make sure that the right type of cartridge is provided for the respective intended application. For example, normal or oil separator cartridges (OSC) as well as cartridges for different pressure levels etc. can be provided depending on said application. However, it is not secured that the right type of cartridge is assembled for the right application. Additionally or as a result of that, the assembly process is time-consuming, wherein positioning of the cartridge and finding the start of threat of the cartridge with respect to its counterpart are difficult (during the assembly process).

For example, EP 1 655 500 B1 discloses such an air dryer cartridge comprising a single-start screw thread.

Thus, it is the problem of the invention to improve an air treatment cartridge advantageously, in particular with respect to a more efficient assembly process, user-friendliness, and adaptability to different applications.

According to the invention, this problem is solved by an air treatment cartridge according to claim 1.

An air treatment cartridge, especially air dryer cartridge, for an air treatment device for a vehicle, especially utility vehicle, comprises: a cartridge body having a connecting portion for connecting the air treatment cartridge to the air treatment device, the connecting portion being formed on the cartridge body and having a leading end, a trailing end opposite to the leading end, and a multi-start screw thread formed between the leading end and the trailing end, wherein each start of thread of the multi-start screw thread is offset to one another on the leading end and/or the trailing end.

The invention is based on the basic idea that an air treatment cartridge is provided with a multi-start screw thread for connecting the air treatment cartridge to an air treatment device, thereby allowing positioning of the cartridge as well as finding the start of threat of the cartridge with respect to its counterpart in an easy and quick manner during an/the assembly process. Additionally, it may be possible that, due to the multi-start screw thread, the cartridge can only be connected to a correspondingly formed multi-start screw thread provided on the air treatment device, thereby ensuring that the right type of cartridge can only be assembled to the right application. Additional to the advantage of the easy and quick finding of the correct position for assembling the cartridge to its counterpart of the air treatment device due to the plurality of start of threads of the multi-start screw thread, an increased pitch of the multi-start screw thread, compared to a single-start screw thread, may facilitate the assembly to be conducted in a faster manner. Hence, the assembly process itself may be enhanced with respect to time efficiency and user-friendliness.

In particular, the connecting portion may be tubular. For example, a fluid tract may be formed through the connecting portion.

As described above, put in other words, the multi-start screw thread may comprise a plurality of threads, i.e., two or more threads, each of the threads having a start of thread.

The multi-start screw thread may have a screw thread profile. Each of the threads of the multi-start screw thread may have a respective screw thread profile, wherein, optionally, the respective screw thread profiles may be the same or may be configured in a partially different manner from each other, i.e., may be partially different from each other.

The multi-start screw thread may comprise a first screw thread having a first start of thread and a second screw thread having a second start of thread. It may be possible, that the multi-start screw thread may further comprise a third screw thread having a third start of thread and, optionally, a fourth screw thread having a fourth start of thread. It may further be possible, that the multi-start screw thread may comprise further screw threads having respective further starts of threads.

Each start of thread of the multi-start screw thread may be offset to one another on the leading end in an evenly distributed manner. For example, in case of two starts of threads of the multi-start screw thread, the starts of threads may be offset to one another at 180°, in case of three starts of threads of the multi-start screw thread, the starts of threads may be offset to one another at 120°, etc. (i.e., evenly distributed over 360°). However, it may also be possible that each start of thread of the multi-start screw thread may be offset to one another on the leading end in an unevenly distributed manner. In this case, any amount of offset degree may be realized for the distribution of the starts of the threads.

The threads of the multi-start screw thread may be interleaved to each other in a parallel manner. In other words, each thread of the multi-start screw thread may run parallel to each other. Hence, each thread of the multi-start screw thread may run parallel to each other from the leading end to the trailing end of the connecting portion.

Due to the plurality of threads, i.e., two or more threads, of the multi-start screw thread running parallel to each other, the pitch of each of the threads of the multi-start screw thread may be increased compared to a thread of a single-start screw thread. In this respect, the pitch of each of the threads may depend on the total number of threads of the multi-start screw thread, i.e., the pitch may increase with an increasing number of threads of the multi-start screw thread and vice versa. For example, the first and the second screw thread of the multi-start screw thread as mentioned above, may have a respective pitch being twice as high as compared to a corresponding single thread. Therefore, due to said increased pitch, the assembly time of the cartridge to the air treatment device may be reduced as well as the assembly process of the cartridge to the air treatment device may be simplified since less rotations may be required for threading the cartridge to the air treatment device.

The multi-start screw thread may be a female multi-start screw thread. In other words, the multi-start screw thread is engageable with a male multi-start screw thread provided on a counterpart, e.g., the air treatment device, further e.g., a part or portion of the air treatment device. However, alternatively, the inverse situation may be given. Accordingly, the multi-start screw thread may be a male multi-start screw thread.

The multi-start screw thread may comprise a standardized screw thread profile or a screw thread profile having a reduced cross-sectional thread area in relation to a standardized screw thread profile. Accordingly, a screw connection may be achievable by means of the multi-start screw thread that (the screw connection) may be highly flexible and may allow combining different thread profiles to be used, while at the same time allowing to provide selective thread profiles, which can only be used with a very specific corresponding thread profile. Herein, the cross-sectional area of a screw thread profile may be defined as an area, which is included in one unit of a thread and groove, which are repeated along the screw thread. When a screw thread profile is used, which has a reduced cross-sectional area, this means that the threading uses less material and can engage with a larger number of different threading profiles and types. In particular, such a thread profile may be compatible with both the standardized screw thread profile, from which it is derived, and further screw thread profiles, which are using more material. In particular, the screw thread profile having a reduced cross-sectional thread area in relation to a standardized screw thread profile may be understood such that, compared to a standardized screw thread profile, the profile is reduced at least one position, but not enlarged compared to a standardized screw thread profile at any position. In particular, the first screw thread profile may be defined such that it is a genuine subset of the standardized screw thread profile. In other words, the standardized screw thread profile may be used as an envelope curve, which comprises the screw thread profile.

The standardized screw thread may be of an ISO metric or a buttress type. Alternatively, the standardized screw thread may be of an inch-sized type. However, other types of standardized thread profiles may be used as such or may be used as a starting point to configure the screw thread profile. For example, the standardized screw thread may be a thread complying with a standard or norm such as ISO 965, DIN 13 or DIN 513. Also, the standardized screw thread may be a thread complying with a standard or norm for threads for connecting air-dryer cartridges and pneumatic systems, in particular for utility vehicles.

The screw thread profile may be configured such that it corresponds to a modified standardized profile. In particular, the first screw thread profile may have a reduced material distribution, i.e., less material may be used for the threads and the grooves between separate threads may be larger.

The screw thread profile may have a first flank, a flat crest region, and a second flank, wherein at least one non-rounded edge may be formed between the first or second flank and the crest region.

The screw thread profile may have a rounded root region formed between a first and second flank.

In particular, a screw thread profile may be provided with a flat thread tip or crest region, having at least one non-rounded edge, and with a rounded root region between the threads.

Alternatively or additionally, rounded and non-rounded root regions may be used, for example a sequence of rounded and non-rounded root regions.

The screw thread profile may have a first and a second flank which are asymmetric. For example, they may have a different slope relative to the thread longitudinal axis. Also, they may have a different shape, for example straight, rounded, with pointed steps, or otherwise non-linear.

The multi-start screw thread may be configured to provide female threads with an edge that may securely be engageable with male threads of the counterpart, e.g., the air treatment device, to which the cartridge is to be connected, thus improving the connection strength. A sufficiently secure and tight connection may be reached with a short thread. Also, by providing an asymmetric female screw thread profile, secure contact between male and female threads may be ensured, while preserving compatibility between different thread types.

The threads of the female screw thread profile may be defined as facing inwards towards a longitudinal axis of the connecting portion of the cartridge substantially extending between the leading end and the trailing end. On the other hand, grooves may be formed between the threads, in particular defining recesses in the material of the connecting portion, which are facing outwards from the longitudinal axis of the connecting portion as a whole.

Accordingly, on the other hand, threads of the male screw thread profile, to which the female screw thread, i.e., the multi-start screw thread, may be engageable and which may be part of the air treatment device, may be defined as facing outwards, away from the longitudinal axis of the connecting portion, when engaged with the female screw thread. Grooves of the male screw thread profile may be formed between the threads, in particular defining recesses in the material of the first connecting element, which are facing towards the longitudinal axis of the connecting portion, when engaged with the female screw thread.

When the cartridge and the air treatment device are screw-connected with each other, the threads, i.e., the female threads, of the multi-start screw thread of the cartridge may be configured to engage with the grooves of the multi-start screw thread of the air treatment device, and the grooves of the multi-start screw thread of the cartridge may be configured to engage with the threads of the multi-start screw thread of the air treatment device.

The screw thread profile may be configured to engage with a screw thread profile, in particular an ISO metric male screw thread profile, of a multi-start screw thread of the air treatment device (for example, as mentioned above) such that a non-rounded edge of the screw thread profile of the multi-start screw thread of the air treatment cartridge has a contact point with a flank of the screw thread profile of the multi-start screw thread of the air treatment device.

In other words, when the cartridge and the air treatment device are screw-connected with each other, the screw thread profile of the cartridge, which may be in particular a female screw thread profile, may be configured to engage with the, in particular male, screw thread profile of the air treatment device such that the non-rounded edge of the female screw thread profile has at least a contact point with a flank of the male screw thread profile. The screw thread profile of the air treatment device may be a standardized profile such as an ISO metric or buttress-type male screw thread profile. In particular, since the screw thread profiles represent cross-sections of the actual threads, the contact between the female and male screw thread profiles may extend along at least a line. Additionally or alternatively, the contact point may have an area, while it may only extend over a part of the contacted flank of the male screw thread profile; in this case, the contact between the female and male screw thread profiles may extend along at least a band with a given width.

Therefore, the contact may be advantageously well suited to transfer forces between the cartridge and the air treatment device, and to seal the their connection to each other.

The female screw thread profile may be configured such that the non-round edge is formed as a sharp edge, and in particular suited to cut or bite into a material of the male screw thread. For example, the non-rounded edge may have an angle of less than 110°, in particular less than 100° and in particular equal to 90°.

Therefore, the connection may advantageously be very secure.

In particular, the male threads may at least partially be formed from a softer material than the material of the female threads, thus facilitating a deformation of the male threads by the non-rounded edge of the female threads without damaging the female thread profile. Thus, the female threads of the second connecting element can cut into the material of the male threads, when the screw connection between the cartridge and the air treatment device is tightened.

The female screw thread profile may be configured such that the second flank has a section, which can be arranged adjacent to the crest region, that is essentially straight and/or has a 60° angle relative to the longitudinal axis of the thread, such that a contact surface is formed between a thread of the female screw thread profile and a corresponding thread of the male screw thread profile, when the cartridge and the air treatment device are screw-connected to each other.

Therefore, the connection between the cartridge and the air treatment device may be advantageously tight and a good transfer of forces between the male and female threads may be ensured.

In particular, the angle of the second flank may be chosen such that a contact surface is formed with a male ISO screw thread.

The female screw thread profile may be configured such that the first flank, in a section adjacent to the crest region is formed steeper than a section of the second flank adjacent to the crest region.

The screw thread profile may be configured such that at least a part of the first flank is essentially perpendicular to the longitudinal axis of the thread, in particular perpendicular to the longitudinal axis of the connecting portion.

Thus, a high stability of threads may advantageously be reached.

The female screw thread profile may be configured such that the rounded root region between the second and first flank has a radius corresponding essentially to a width of a corresponding crest region of the male screw thread profile, in particular the width of a corresponding crest region of a standardized male screw thread profile, for example of an ISO screw thread profile.

For example, but not limiting thereto, the radius of the rounded root region of the female thread profile may correspond to between 0.7 and 1.3, in particular between 0.9 and 1.1, of the width of the corresponding crest region of the male screw thread profile, in particular a corresponding male ISO thread profile, to which the female thread profile of the cartridge is engageable.

Thus, an assembly of the cartridge and the air treatment device may advantageously be made easier for the user.

The screw thread profile may be configured as a modified V-shaped profile, such that it has an inverted crest region, in particular a W- or M-shaped thread profile; and/or the screw thread profile may be configured as a modified V-shaped profile, such that it has a broadened and/or deepened groove region.

For example, the female screw thread profile may be W-shaped and the corresponding male profile, to which the female screw thread profile is engageable, may be essentially inverse to the female profile. Thus, when the cartridge and the air treatment device are screw-connected to each other, the resulting screw connection may provide advantageously a very tight closure, since the connecting elements of the cartridge and the air treatment device (e.g., the connecting portion and the connecting part), have a very large contact area and fluids have to travel very long in order to pass by this connection.

The screw thread profile may be configured as a modified V-shaped profile, such that one flank has a lower slope than the other flank.

For example, the female screw thread profile may be asymmetrically V-shaped and the corresponding male profile, to which the female screw thread profile is engageable, may be essentially inverse to the female profile. Thus, when the cartridge and the air treatment device are screw-connected to each other, the resulting screw connection may be made advantageously strong, to withstand large pressures and load changes.

The, in particular female, screw thread profile may be compatible to a standardized male thread profile, in particular to a metric ISO screw thread profile and/or a buttress-type thread profile.

This may allow advantageously high compatibility and connecting the cartridge, i.e., the connecting portion of the cartridge, multi-start screw threads with standardized threads, i.e., thread profiles. On the other hand, the specific profile may allow for connections with specific male threads, thereby preventing the connection of cartridges to an air treatment device for unsuited applications.

The, in particular female, screw thread profile may be configured such that an internal thread height is larger than an external thread height, in particular an external thread height of a corresponding standardized male thread profile, in particular an ISO metric screw thread profile and/or a buttress-type thread profile (e.g., to which the screw thread profile is engageable, in other words, to which the screw thread profile is intended to be engaged).

Thus, the internal profile may be advantageously configured such that it defines grooves, in which the threads of different male profiles can easily be accommodated, when the cartridge and the air treatment device are screw-connected to each other. Hence, connecting the cartridge and the air treatment device together by screwing may be simplified.

Further, the invention also provides an air treatment device for a vehicle, especially utility vehicle, being connectable to an air treatment cartridge according to the present description, in particular as described above.

The air treatment device may comprise a connecting part (e.g., the connecting part as already referred to above) for establishing the connection between the air treatment device to the air treatment cartridge, wherein the connecting part has a first end, a second end opposite the first end, and a multi-start screw thread (e.g., the multi-start screw thread as already referred to above for being engaged / engaging to the multi-start screw thread of the cartridge) formed between the first end and the second end and being correspondingly formed to the multi-start screw thread of the air treatment cartridge according to the present description, in particular as described above, thereby being engageable thereto.

In particular, the connecting part may be tubular. For example, a fluid tract may be formed through the connecting part.

The multi-start screw thread of the air treatment device may comprise a screw thread profile. Said screw thread profile may be configured essentially inverted to the screw thread profile of the cartridge. Therefore, both screw thread profiles may engage and may have a maximum of contact surface area.

The multi-start screw thread of the air treatment device may comprise a screw thread profile/thread profile and/or screw threads/threads as described herein, in particular as described above, with respect to the ones, to which the multi-start screw thread of the cartridge is engageable/connectable and/or intended to be engaged/connected.

Still further, the invention also provides a system comprising an air treatment device according to the present description, in particular as described above, and a cartridge/air treatment cartridge according to the present description, in particular as described above, wherein the air treatment device and the cartridge/air treatment cartridge may be connected to each other by their respective multi-start screw threads being engaged to each other (e.g., by a screw connection formed by their respective multi-start screw threads being engaged to each other).

The screw connection between the cartridge and the air treatment device may provide a fluid-tight, in particular air-tight seal and high connection strength to absorb the forces due to high pressure inside the system. Further, a secure connection may be provided due to the screw connection.

Additionally or alternatively, it may also be possible that the multi-start screw thread of the cartridge may have a, in particular female, screw thread profile being engageable to a, in particular male, screw thread profile of the multi-start screw thread of the air treatment device. Each of the before-mentioned thread profiles define threads with a thread area and grooves or gaps between the threads with a groove area along a longitudinal cross section of the connecting portion and the connecting part, respectively, wherein the thread profile of the air treatment device may define a standardized, for example ISO metric or inch-sized, screw thread or a modified screw thread with a larger thread area than the standardized screw thread.

The thread profile of the cartridge may be configured such that the connecting portion of the cartridge is suited to be screw-connected to the connecting part of the air treatment device.

In particular, the modified male screw thread may not be suited for being connected with a standardized female thread.

In particular, the thread profile of the cartridge may be formed within an envelope curve defined by the standardized screw thread.

In particular, the cartridge may be connectable, in particular screw-connectable, to the air treatment device in such a manner that, when connected to each other, the screw connection may be configured to secure the cartridge and the air treatment device against translation along a longitudinal axis of the screw connection.

Herein, a standardized screw thread profile may be any screw thread profile, which defines symmetric threads with straight flanks and a pointed, flattened or rounded crest. Also, the standardized screw thread profile may be any thread profile, which defines symmetric grooves with straight flanks and a pointed, flattened or rounded root. In particular, the standardized screw thread profile may define a groove with a pointed, flattened or rounded V-shaped root.

Thus, different types of thread profiles may be provided for the multi-start screw thread of the cartridge to differentiate different cartridge designs and to ensure that the right type of cartridge is used for the respective application. Thus, the screw thread profile of the air treatment device may be chosen such that only the screw thread profile of a particular cartridge may be compatible and other cartridges for other intended applications cannot be connected. Thus, the connecting part of the air treatment device may be made selective for a specific type of connecting portion of a/the cartridge. At the same time, the screw thread profile of the cartridge may be chosen such that the cartridge may be connected to the air treatment device at a standardized male screw thread profile; thus, the screw thread profile of the cartridge may also be used more generically.

As already outlined above, the standardized screw thread profile may be an ISO metric screw thread profile. Also, a standardized screw thread profile may be a stretched or compressed ISO metric screw thread profile. Instead of an ISO metric screw thread profile, an inched-measured screw thread profile may be used.

The modified screw thread profile may be completely contained in an envelope curve defined by a corresponding standardized thread profile, thus providing compatibility of the male and female threads.

For example, the cartridge may have a multi-start screw thread with modified female threads and may be screw-connectable to a multi-start screw thread of a connecting part of an air treatment device, either with male ISO threads or non-ISO threads. On the other hand, male threads may be modified such that only a cartridge having a multi-start screw thread with the modified female threads may be connectable thereto.

Additionally or alternatively, it may also be possible that the thread profile of the multi-start screw thread of the cartridge may define a thread with a first flank, which may have at least a straight section, wherein the first flank has the same slope as a corresponding flank of the standardized thread profile. Also, the thread profile of the multi-start screw thread of the cartridge may define a second flank, which may have at least a straight section, wherein the second flank has a lower slope than the corresponding flank of the standardized thread profile. Thus, an asymmetric thread may be provided.

The thread profile of the multi-start screw thread of the cartridge may define a symmetric thread. In particular, the thread profile may have symmetric grooves and threads, in particular a V- or U-shaped groove and/or thread.

The thread profile of the multi-start screw thread of the cartridge may define a thread with an inverted crest region.

The thread profile of the multi-start screw thread of the cartridge may define a thread with essentially the same thread base width as for the corresponding standardized thread profile.

The thread profile of the multi-start screw thread of the cartridge may define a thread with a flank with a section that is perpendicular to the longitudinal axis of the first connecting element.

The perpendicular section of the flank may be arranged next to a flattened or rounded root of the groove defined by the thread profile of the multi-start screw thread of the cartridge.

Additionally or alternatively, it may also be possible that the thread profile of the multi-start screw thread of the cartridge may define a thread with the same thread height as a thread height in a corresponding standardized thread profile and other parameters of the thread profile. In particular, the corresponding groove depth may be equal for the first and the standardized screw thread profile.

Additionally or alternatively, it may also be possible that the thread profile of the multi-start screw thread of the cartridge may define a thread with a first thread area, which may be defined by a thread height and a thread base width. Herein, the thread area may be smaller than the area of a corresponding groove of the standardized screw thread profile. Thus, when the cartridge and the air treatment device are screw-connected to each other, there may be a gap between the respective multi-start screw threads of the cartridge and the air treatment device inside the connected threads.

Additionally or alternatively, it may also be possible that the screw thread profile of the cartridge may be configured such that the connecting portion is suited to engage with a screw thread profile of the connecting part of the air treatment device that defines a standardized screw thread or a modified screw thread with a larger thread area than for the standardized screw thread profile.

Thus, compatibility may be reached for standardized and not standardized screw profiles, in particular for ISO and non-ISO screw thread profiles.

In particular, the thread profile of the cartridge may be formed within an envelope curve defined by the standardized screw thread.

While the thread profiles of connecting elements, i.e., the connecting portion and the connecting part, of the cartridge and the air treatment device, respectively, may usually be chosen inverse to each other, i.e., the respective thread profiles correspond essentially to each other's inverse profile, a thread profile may be more generic, i.e., compatible to a larger number of corresponding thread profiles, when material is removed from the thread profile. Accordingly, in a method for manufacturing threads according to the screw thread profile, a connecting portion of a cartridge may be provided and material may be removed such that a modified screw thread profile is reached that has a smaller thread area than according to the standardized screw thread profile.

Also, customized cartridge solutions may be provided.

Cartridges with the specific threading may be made compatible with standardized, metric thread air dryer connections, while it may be secured that only the same unique thread cartridge can be mounted to a unique thread air dryer (e.g., of an air treatment device).

The threading for such a connection may in particular be based on a standard ISO metric screw threading. Thus, the threading of one connection element, in particular a female threading, may be compatible to a respective standard threading, in particular a standard male threading.

As a difference between standard and specific threading, material may be removed from the threads of the connecting portion of the cartridge, in particular a female threading, as typically used for a cartridge for pressurized air applications (e.g., in an air treatment device / a pressurized air system). Thus, it may be ensured that unique thread connection elements such as cartridges are compatible with and can be mounted on metric thread standard connection elements, such as threads of an air treatment device such as an air dryer.

However, the threading may be used in other applications, such as other devices or systems for a screw connection.

Additionally or alternatively, it may also be possible that material may be removed from the tip region of the female threading. For example, an inverted crest region may be formed, i.e., instead of an inwards-facing pointed, rounded or flat crest of the internal threads, the screw thread profile may comprise an outwards-pointing region. In particular, two or more separate crests may be formed.

Additionally or alternatively, it may also be possible that material may be removed from one side of the threading with a profile-angle modification.

Additionally or alternatively, it may also be possible that material may be removed in a root region of the female threading.

Additionally or alternatively, it may also be possible that material may be removed from the threads and grooves of the female threading, thus combining two afore-mentioned variants.

These and other aspects of the present invention will now be described in more detail, with reference to the appended drawings showing exemplary embodiments of the invention, wherein:
- Fig. 1: illustrates a partial view of an air treatment cartridge according to an exemplary embodiment of the invention in a cross-sectional manner;
- Fig. 2: illustrates a partial view of an air treatment device according to an exemplary embodiment of the invention;
- Fig. 3: illustrates a system according to an exemplary embodiment of the invention;
- Fig. 4: illustrates threaded connecting elements according to an exemplary embodiment of the invention
- Fig. 5A-5D: illustrate threaded connecting elements according to a further exemplary embodiment of the invention;
- Fig. 6A-6D: illustrate threaded connecting elements according to a further exemplary embodiment of the invention;
- Fig. 7A-7E: illustrate threaded connecting elements according to a further exemplary embodiment of the invention;
- Fig. 8A-8C: illustrate threaded connecting elements according to a further exemplary embodiment of the invention; and
- Fig. 9A-9C: illustrate threaded connecting elements according to a further exemplary embodiment of the invention.

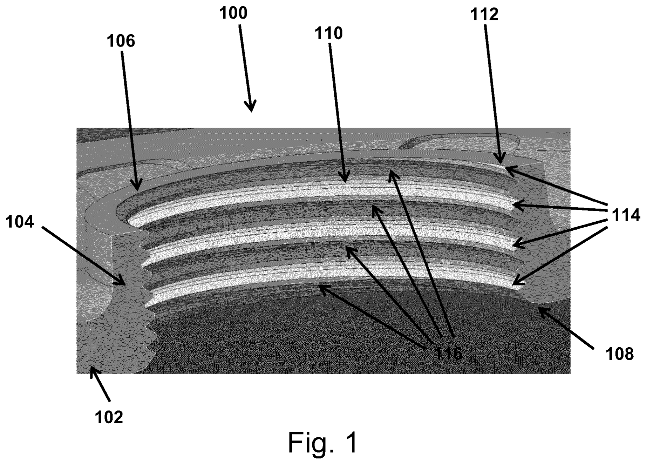

Turning to **Fig. 1****,** a schematic partial view of an air treatment cartridge 100 according to an exemplary embodiment of the invention is illustrated in a cross-sectional manner, wherein only a part of the cartridge 100 is shown for reasons of clarity.

The air treatment cartridge 100 comprises: a cartridge body 102 having a connecting portion 104 for connecting the air treatment cartridge 100 to the air treatment device 200, the connecting portion 104 being formed on the cartridge body 102 and having a leading end 106, a trailing 108 end opposite to the leading end 106, and a multi-start screw thread 110 formed between the leading end 106 and the trailing end 108, wherein each start of thread 112 of the multi-start screw thread 110 is offset to one another on the leading end 106.

The connecting portion 104 is tubular. Further, a fluid tract is formed through the connecting portion 104.

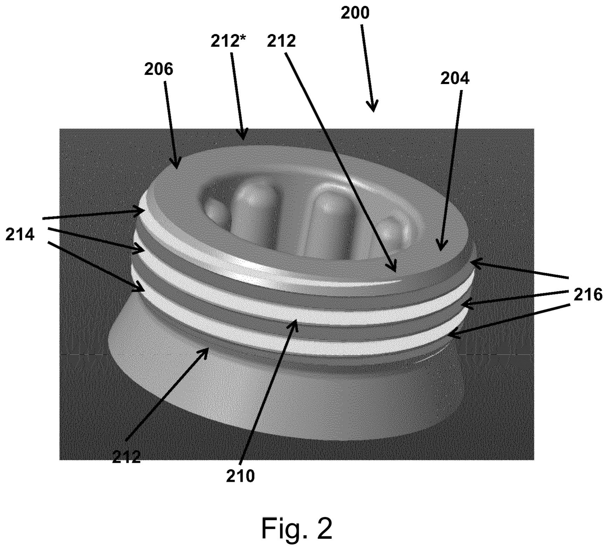

The multi-start screw thread 110 is a female multi-start screw thread 110. In other words, the multi-start screw thread 110 is engageable with a male multi-start screw thread 210 provided on a counterpart, e.g., the air treatment device 200, further e.g., a part 204 or portion of the air treatment device 200 (see Fig. 2).

The multi-start screw thread 110 comprises a plurality of threads 114, 116, here two threads 114, 116, wherein each of the threads 114, 116 has a start of thread 112. Accordingly, as depicted in Fig. 1, the multi-start screw thread 110 comprises a first screw thread 114 having a first start of thread 112 and a second screw thread 116 having a second start of thread (not depicted in the Fig. 1).

The multi-start screw thread 110 has a screw thread profile. Each of the threads 114, 116 of the multi-start screw thread 110 has a respective screw thread profile, which, in the present case, are identically formed with respect to each other. The configuration of said screw thread profile will be described in more detail further below.

Each start of thread 112 of the multi-start screw thread 110 is offset to one another on the leading end 106 in an evenly distributed manner. Hence, in the present case of two starts of threads 112 of the first and second threads 114, 116 of the multi-start screw thread 110, the starts of threads 112 are offset to one another at 180° (accordingly, the start of thread 112 of the second thread 116 is not shown in Fig. 1 due to the cross-sectional view).

As can be seen in Fig. 1, the threads 114, 116 of the multi-start screw thread 110 are interleaved to each other in a parallel manner. In other words, each thread 114, 116 of the multi-start screw thread 110 runs parallel to each other. Hence, each thread 114, 116 of the multi-start screw thread 110 runs parallel to each other from the leading end 106 to the trailing end 108 of the connecting portion 104.

Now turning to **Fig. 2****,** a schematic partial view of an air treatment device 200 according to an exemplary embodiment of the invention is illustrated, wherein only a part of the device 200 is shown for reasons of clarity.

The air treatment device 200 is connectable to an, especially the above described, air treatment cartridge 100 in screwing manner.

Accordingly, the air treatment device 200 comprises a connecting part 204 for establishing the connection between the air treatment device 200 to the air treatment cartridge 100, wherein the connecting part 204 has a first end 206, a second end 208 opposite the first end 206, and a multi-start screw thread 210 formed between the first end 206 and the second end 208 and being correspondingly formed to the multi-start screw thread 110 of the air treatment cartridge 100 according to the present description, in particular as described above, thereby being engageable thereto.

In particular, the connecting part 204 is tubular. Further, a fluid tract is formed through the connecting part 204.

The multi-start screw thread 210 is a male multi-start screw thread 210, as already referred to above.

The multi-start screw thread 210 of the air treatment device 200 comprises a screw thread profile. Said screw thread profile is configured essentially inverted to the screw thread profile of the cartridge 100. Therefore, both screw thread profiles can engage and can have a maximum of contact surface area.

Since the multi-start screw thread 210 of the device 200 is correspondingly formed to the multi-start screw thread 110 of the air treatment cartridge 100, the multi-start screw thread 210 comprises a plurality of threads 214, 216, here two threads 214, 216, wherein each of the threads 214, 216 has a start of thread 212. Accordingly, as depicted in Fig. 2, the multi-start screw thread 210 comprises a first screw thread 214 having a first start of thread 212 and a second screw thread 216 having a second start of thread 212*.

Each of the threads 214, 216 of the multi-start screw thread 210 has a respective screw thread profile, which, in the present case, are identically formed with respect to each other as well as correspondingly formed to the screw thread profile of the multi-start screw thread 110 of the air treatment cartridge 100. The configuration of said screw thread profile of the device 200 will be described in more detail further below.

In other words, the thread profile of the device 200 is configured such that the connecting part 204 of the device 200 is suited to be screw-connected to the connecting portion 104 of the cartridge 100, and/or vice versa.

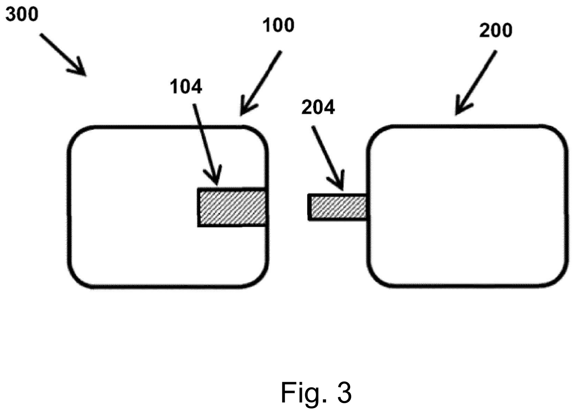

Further, as shown in **Fig. 3****,** a system 300 is provided, which comprises the air treatment device 200 and the cartridge/air treatment cartridge 100, wherein the air treatment device 200 and the cartridge/air treatment cartridge 100 can be connected to each other by their respective multi-start screw threads 110, 210 being engaged to each other (e.g., by a screw connection formed by their respective multi-start screw threads 110, 210 being engaged to each other). In this case, Fig. 3 schematically shows a situation of the cartridge 100 and the device 200 shortly before the screw connection between the connecting portion 104 and the connecting part 204 is established.

Accordingly, the connecting portion 104 and the connecting part 204, i.e., in other words, the connection elements, which, e.g., may also be referred to as the first and the second connection element, are complementary to each other, i.e., they are configured such that a screw connection can be provided by the connecting portion 104 and the connecting part 204, i.e., the connection elements.

Accordingly, the connecting portion 104 has an internal threading, and is thus configured as a "female" connection element. Herein, the connecting portion 104 has a first thread profile, i.e., the first and the second screw threads 114, 116 of the multi-start screw thread 110 have a first thread profile.

Accordingly, the connecting part 204 has an external threading, and is thus configured as a "male" connection element. Herein, the connecting part 204 has a first thread profile, i.e., the first and the second screw threads 214, 216 of the multi-start screw thread 210 have a second thread profile.

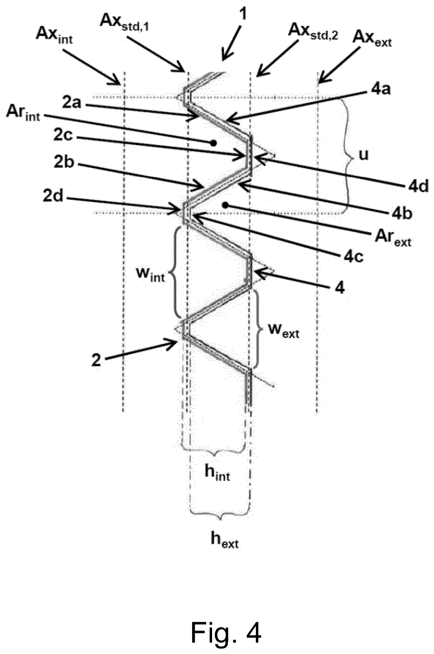

The connecting portion 104 and the connecting part 204 may be configured as shown below for the exemplary embodiments of Fig. 4 to Fig. 9C.

In particular, the first thread profile of the connecting portion 104 is configured such that it is compatible to the second thread profile of the connecting part 204. I.e., a screw connection can be provided by screw-connecting the connecting portion 104 and the connecting part 204.

On the other hand, in an inverted case, where internal and external threading are inverted, a third thread profile, which corresponds to an inverted first profile, and a fourth profile, which corresponds to an inverted second profile, are not compatible. I.e., no screw connection can be provided between connection elements with the third and fourth thread profiles.

The screw connection between the cartridge 100 and the air treatment device 200 provides a fluid-tight, in particular air-tight seal and high connection strength to absorb the forces due to high pressure inside the system 300. Further, a secure connection can be provided due to the screw connection.

In the following the screw connection between the air treatment cartridge 100 and the air treatment device 200 will be described in more detail. In particular, the respective connecting elements, i.e., the connecting portion 104 and the connecting part 204, of the air treatment cartridge 100 and the air treatment device 200 forming said screw connection will be described with a focus on the screw thread profiles, which can be applicable to the multi-start screw thread 110 of the air treatment cartridge 100 and/or to the multi-start screw thread 210 of the air treatment device 200 for establishing said screw connection.

It should be understood, that, even though the screw connection and its related features are substantially described together in the following description, all described features may be taken alone or in any combination as disclosed below as a constituent part of the air treatment cartridge 100 alone, especially of the multi-start screw thread 110 of the air treatment cartridge 100 alone, and/or of the air treatment device 200 alone, especially of the multi-start screw thread 210 of the air treatment device 200 alone.

Turning to **Fig. 4****,** a schematic view of a screw connection is described. In particular, the most relevant elements of screw thread profiles and screw connections are shown.

In particular, the screw connection can be reached by ISO metric screw threads, such as defined, for this example, in international standard ISO 68-1. Herein, each thread is characterized by a major diameter and a pitch. ISO metric threads consist of a symmetric V-shaped thread. The outermost 1/8 and the innermost 1/4 of the height H of the V-shape are cut off from the V-profile. In the plane of the thread axis, the flanks of the V have an angle of 60° to each other. The thread depth is thus in particular 0.54125 * pitch.

In an external, male thread, such as on a bolt, the major diameter and the minor diameter define maximum dimensions of the thread. This means that the external thread has a flat end, but can be rounded out below the minor diameter. Conversely, in an internal, female thread, e.g., in a nut, the major and minor diameters are minimum dimensions; therefore, the thread profile has a flat end, but may be rounded out beyond.

The minor diameter and effective pitch diameter are derived from the major diameter and pitch.

In Fig. 4, a detail of a system 1 is shown. An internal screw thread profile 2, e.g., of the multi-start screw thread 110 of the air treatment cartridge 100, and an external screw thread profile 4, e.g., of the multi-start screw thread 210 of the air treatment device 200, are engaged with each other.

The threads of each thread profile 2, 4 are arranged in the corresponding grooves of the respective profile 4, 2. In this respect, the first screw thread 114 of the multi-start screw thread 110 of the air treatment cartridge 100 corresponds to the first screw thread 214 of the multi-start screw thread 210 of the air treatment device 200, and the second screw thread 116 of the multi-start screw thread 110 of the air treatment cartridge 100 corresponds to the second screw thread 216 of the multi-start screw thread 210 of the air treatment device 200.

Along a longitudinal axis of the connection, axes Axᵢₙₜ, Axₑₓₜ are defined at longitudinal axes of the internally and externally threaded connecting elements, i.e., the connecting portion 104 and the connecting part 204, respectively.

Furthermore, along the longitudinal axis of the connection, axes Ax_{std,1}, Ax_{std,2} are defined as axes, which limit the outer and inner diameter of the threads.

A unit u, whose width corresponds to the pitch of the thread, i.e., the first screw thread 114, 214 or the second crew thread 116, 216, denotes one unit u defining one thread and one groove. Along the length of the threading, the profile of the unit u is repeated. In this respect, the first screw thread 114, 214 and the second crew thread 116, 216 alternate along said length, e.g., along the distance between the leading end 106 or the first end 206 and the trailing end 108 or the second end 208, respectively.

The internal screw thread profile 2, e.g., of the multi-start screw thread 110 of the air treatment cartridge 100, defines a thread with a first flank 2a, which in this case of an internal threading extends inwardly, i.e., towards the center axis of the threading. The first flank 2a extends to a crest region 2c, which is flat in the embodiment. Adjacent to the crest region 2c, a second flank 2b is arranged, which extends outwardly and ends at a root region 2d, which is also flat in this example. The flanks 2a, 2b and the crest region 2c define a thread with a base width wᵢₙₜ and a thread height hᵢₙₜ.

Similarly, the external screw thread profile 4, e.g., of the multi-start screw thread 210 of the air treatment device 200, defines a thread with a first flank 4a, which in this case of an external threading extends outwardly, i.e., away from the center axis of the threading. The first flank 4a extends to a root region 4d, which is flat in the embodiment. Adjacent to the root region 4d, a second flank 4b is arranged, which extends inwardly and ends at a crest region 4c, which is also flat in this example. The flanks 4a, 4b and the crest region 4c define a thread with a base width wₑₓₜ and a thread height hₑₓₜ.

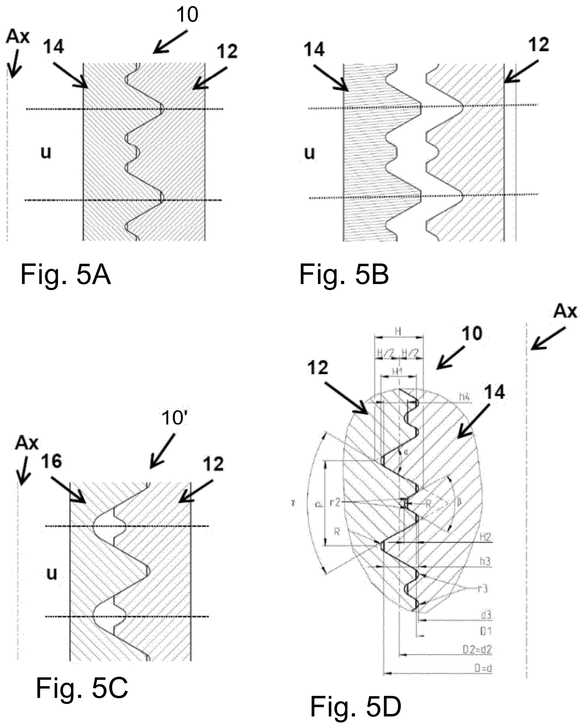

Turning to **Fig. 5A-5D****,** an embodiment of the threaded connection elements, i.e., the connecting portion 104 and the connecting part 204, is described. Reference is made to the above-described screw connection and only differences are described in detail.

In the case shown in Fig. 5A-D, the female screw thread profile 12 is modified from a V-shaped profile such that it has an inverted tip. I.e., instead of a flat crest region, an outwardly extending V-shaped cross-section is formed. The resulting cross-section may be understood as a W- or M-shaped thread profile.

In the case of **Fig. 5A****,** an assembly of connected elements 10, i.e., of the connecting portion 104 and the connecting part 204, is shown. A longitudinal center axis Ax of the screw connection is shown schematically; the relation of lengths and distances are not to scale. The male thread profile 14 has essentially the inverted thread profile as the female thread profile 12, i.e., grooves and threads of the male thread profile 14 are essentially formed as "negative" of the threads and grooves of the female thread profile 12. Thus, and only a small gap or no gap is formed between the profiles 12, 14.

The modification of the female profile 12 leads to a lower thread profile height, while the same connecting surface is reached as for a thread with V-profile. Thus, a higher strength of the connection is reached.

At the same time, there are more connected edges between the threads at the same length, thus yielding a better orientation and connection between the two connecting elements.

Also, a labyrinth seal is achieved against fluid, water, oil and air due to more complex geometry, in particular the inverted thread tip. Thus, the connection is made especially fluid-tight.

In the case of **Fig. 5B****,** the female 12 and male profiles 14 are shown separated from each other. The internal thread profile 12 is shown schematically in a front view.

Thus, a standardized female screw profile would not be suited to be screw-connected with the male screw thread profile 14 shown in Fig. 5A and 5B.

In the case of **Fig. 5C****,** another assembly of connected elements 10', i.e., the connecting portion 104 and the connecting part 204, is shown. A longitudinal center axis Ax of the screw connection is shown schematically; the relation of lengths and distances are not to scale. A standardized male thread profile 16 has essentially a V-shaped or ISO metric screw thread profile corresponding to the female thread profile 12, i.e., grooves and threads of the male thread profile 16 are corresponding to threads and grooves of the female thread profile 12. However, due to the modifications of the female screw thread profile 12, gaps are formed between the profiles 12, 16.

In particular, the threads and grooves are not pointed, but flattened or rounded. This case is typically closer to the actual design of ISO metric and similar screw threads than profiles with sharp edges. In further embodiments, pointed transitions can be formed between sections of the thread profiles, for example connecting a flank and a tip or groove by a pointed transition.

The female thread profile 12 of this embodiment is modified from a V-shaped profile such that it has an inverted tip. I.e., instead of a flat crest region, an outwardly extending V-shaped cross-section is formed. The resulting cross-section may be understood as a W- or M-shaped thread profile.

Thus, for a threading as the one shown in Fig. 5A, a standardized female screw profile would not be suited to be screw-connected with the male screw thread profile 14.

In the case of **Fig. 5D****,** the assembly of Fig. 5A is shown with technical details for the respective sizes, lengths and angles, and their relation to each other. Of course, all lengths the dimensions may be scaled or modified, depending on the purpose.

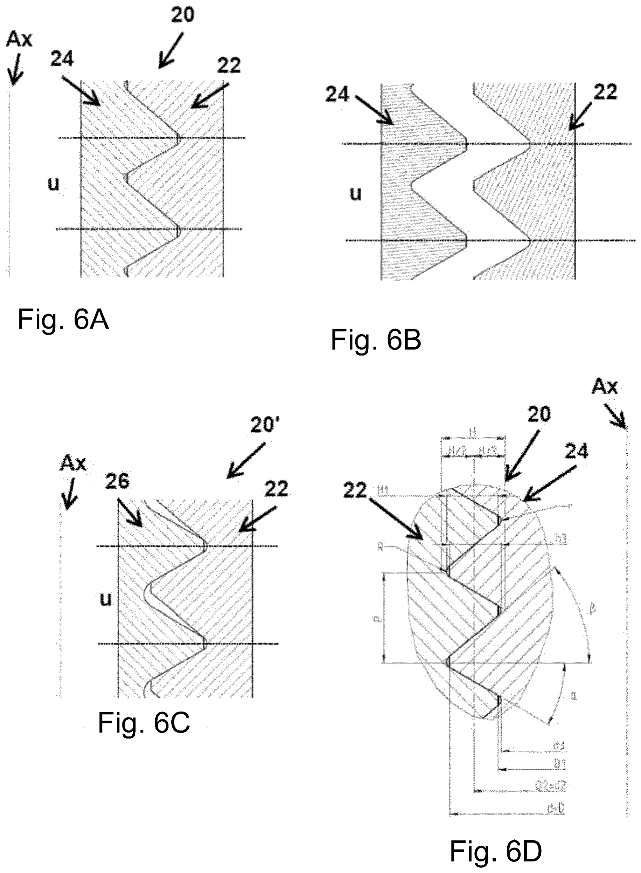

Turning to **Fig. 6A-6D****,** another embodiment of the threaded connection elements, i.e., the connecting portion 104 and the connecting part 204, is described. Reference is made to the above-described embodiments and only differences are described in detail.

In the case shown in Fig. 6A-D, the female thread profile 22 is modified from a V-shaped profile such that one flank has a lower slope. Also, the height of the female threads is smaller than for a standardized thread. Thus, the threads of the female screw thread profile 22 do not fill out a groove of a standardized male screw thread profile 26 completely.

In the case of **Fig. 6A****,** an assembly of connected elements 20, i.e., the connecting portion 104 and the connecting part 204, is shown. A longitudinal center axis Ax of the screw connection is shown schematically; the relation of lengths and distances are not to scale. The male thread profile 24 has essentially the inverted thread profile as the female thread profile 22, i.e., grooves and threads of the male thread profile are essentially formed as "negative" of the threads and grooves of the female thread profile 24, and only a small or no gap is formed between the profiles 22, 24.

Compared to the above-described embodiment, this embodiment has the advantage that less material is removed from the female thread 22 as compared to a V-shaped profile, and thus strength and life time are increased. This is particularly important, for the cartridge 10 in a connected state.

Also, an increased clamping force is reached when tightening with the same torque.

In the case of **Fig. 6B****,** the female 22 and male profiles 24 are shown separated from each other. The internal thread profile 22 is shown schematically in a front view.

Thus, a standardized female screw profile would not be suited to be screw-connected with the male screw thread profile 24 shown in Fig. 6A and 6B.

In the case of **Fig. 6C****,** another assembly of connected elements 20', i.e., the connecting portion 104 and the connecting part 204, is shown. A longitudinal center axis Ax of the screw connection is shown schematically; the relation of lengths and distances are not to scale. A standardized male thread profile 26 has essentially a V-shaped or ISO metric screw thread profile corresponding to the female thread profile 22, i.e., grooves and threads of the male thread profile 26 are corresponding to threads and grooves of the female thread profile 22. However, due to the modifications of the female screw thread profile 22, gaps are formed between the profiles 22, 26.

In the embodiment, the threads and grooves are not pointed, but flattened or rounded. This case is typically closer to the actual design of ISO metric and similar screw threads than profiles with sharp edges. In further embodiments, pointed transitions can be formed between sections of the thread profiles, for example connecting a flank and a tip or groove by a pointed transition.

Thus, for a threading as the one shown in Fig. 6A, a standardized female screw profile would not be suited to be screw-connected with the male screw thread profile 24.

In the case of **Fig. 6D****,** the assembly 20 of Fig. 6A is shown with technical details for the respective sizes, lengths and angles, and their relation to each other. Of course, all lengths the dimensions may be scaled or modified, depending on the purpose.

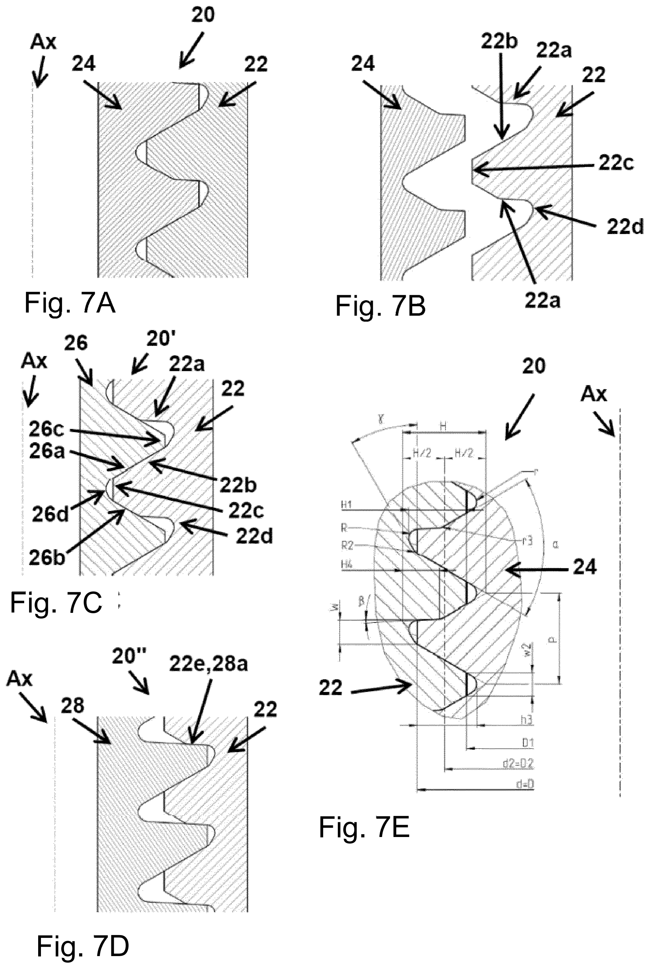

Turning to **Fig. 7A-7E****,** another embodiment is described, which is similar to the asymmetric embodiment shown above. Reference is made to the above-described screw connection, such as the one shown in Fig. 4, and only differences are described in detail. Similar elements are shown with the same reference numerals.

In this particular embodiment, the female screw thread profile according to this embodiment is compatible not only to a corresponding "inverted" male screw thread profile, but also a symmetric standardized male screw thread profile, such as an ISO metric screw profile, and an asymmetric, buttress-type male screw thread profile.

In the case of **Fig. 7A****,** an assembly of connected elements 20, i.e., the connecting portion 104 and the connecting part 204, is shown. A longitudinal center axis Ax of the screw connection is shown schematically; the relation of lengths and distances are not to scale. The male thread profile 24 has essentially the inverted thread profile as the female thread profile 22, i.e., grooves and threads of the male thread profile 24 are essentially formed as "negative" of the threads and grooves of the female thread profile 22, and no gap or only a small gap is formed between the profiles 22, 24.

**Fig. 7B** shows the female 22 and male thread profiles 24 separately.

In this embodiment, a standardized female screw profile would not be suited to be screw-connected with the male screw thread profile shown in Fig. 7A and 7B.

In the case of **Fig. 7C****,** a standardized male thread profile 26 has essentially a V-shaped or ISO metric screw thread profile corresponding to the female thread profile 22, i.e., grooves and threads of the male thread profile 26 are positioned corresponding to threads and grooves of the female thread profile 22. However, due to modifications of the female screw thread profile 22, gaps are formed between the profiles 22, 26.

In this embodiment, the female screw thread profile 22 defines threads, each with a first flank 22a, a flat crest region 22c, and a second flank 22b. Herein, the first 22a and second flank 22b are asymmetric, i.e., they have different thread angles relative to the longitudinal axis of the connection.

Also, a non-rounded edge is formed between the first flank 22a and the crest region 22c and between the second flank 22b and the crest region 22c.

The threads of the female thread profile 22 engage with the grooves of the male thread profile 26 such that the second flank 22b forms a contact surface with the corresponding first flank 26a of the male thread profile 26. To this end, the second flank 22b has a section adjacent to the crest region 22c that is essentially straight and has the same angle relative to the longitudinal axis Axᵢₙₜ as the corresponding first flank 26a of the male thread profile 26.

Also, the non-rounded edge of the female thread profile 22 is in contact with the surface of the male thread 26, in particular at the corresponding second flank 26b of the male thread profile 26.

The first 22a and second flank 22b are asymmetrical. In the embodiment, the first flank 22a has a region that is steeper than the second flank 22b, in particular the region of the first flank 22a, where it is adjacent to the root region 22d, is essentially perpendicular to the longitudinal axis of the connection.

Also, the root region 22d between the second 22b and first flank 22a is rounded. In particular, the root region 22d may have a radius corresponding essentially to a width of the flat crest region 26c of the male screw thread profile 26. The resulting threads are advantageously solid.

Due to the asymmetric form of the female thread profile 22 and the symmetric form of the male thread profile 26, gaps are formed between the threads, as visible in Fig. 7C.

In particular, the male screw thread profile 26 is an ISO screw thread profile.

In further examples, not limiting the invention, the radius of the rounded root region 22d can be determined by a factor between 0.7 and 1.3, in particular between 0.9 and 1.1, relative to the width of a corresponding crest region 26d of the male screw thread profile 26.

In the case shown in Fig. 7A, the same female screw thread profile 22 is shown, in connection with a corresponding male screw thread profile 24, which has essentially the inverted thread profile as the female screw thread profile 22, i.e., grooves and threads of the male thread profile 24 are formed as "negative" of the threads and grooves of the female thread profile 22, and no gap or only a small gap is formed between the profiles 22, 24.

Thus, a standardized female screw profile would not be suited to be screw-connected with the male screw thread profile shown in Fig. 7A.

In the case of Fig. 7C, another assembly of connected elements 20', i.e., the connecting portion 104 and the connecting part 204, is shown. A longitudinal center axis Ax of the screw connection is shown schematically; the relation of lengths and distances are not to scale. A standardized male thread profile 26 has essentially a V-shaped or ISO metric screw thread profile corresponding to the female thread profile 22, i.e., grooves and threads of the male thread profile 26 are corresponding to threads and grooves of the female thread profile 22. Due to the modifications of the female screw thread profile 22, gaps are formed between the profiles 22, 26.

In the case of **Fig. 7D****,** yet another assembly of connected elements 20", i.e., the connecting portion 104 and the connecting part 204, is shown. A longitudinal center axis Ax of the screw connection is shown schematically; the relation of lengths and distances are not to scale. A standardized male thread profile 28 has essentially a standardized buttress-type screw thread profile corresponding to the female thread profile 22, i.e., grooves and threads of the male thread profile 28 are corresponding to threads and grooves of the female thread profile 22. Due to the modifications of the female screw thread profile 22, gaps are formed between the profiles 22, 26.

In the case shown in Fig. 7A-7E, the female thread profile 22 is modified from a V-shaped profile such that at one flank, a region 22e close to the adjoining groove is deepened such that the flank is essentially running in a direction perpendicular to the longitudinal axis of the screw. This modification is clearly visible from a comparison of male 26 and female screw thread profiles 22 in Fig. 7C. It is designed such that a correspondingly oriented surface of a buttress-type male screw thread profile 28 can engage at least partially with this region 22e, 28a, as shown in Fig. 7D.

When the female screw thread profile 22 of this embodiment engages with a standardized buttress-type screw thread profile 28, there are in particular gaps between the crest region of the female screw thread profile 22 and the grooves of the buttress-type screw thread profile 28.

In the case of Fig. 7E, the assembly 20 of Fig. 7A is shown with technical details for the respective sizes, lengths and angles, and their relation to each other. Of course, all lengths the dimensions may be scaled or modified, depending on the purpose.

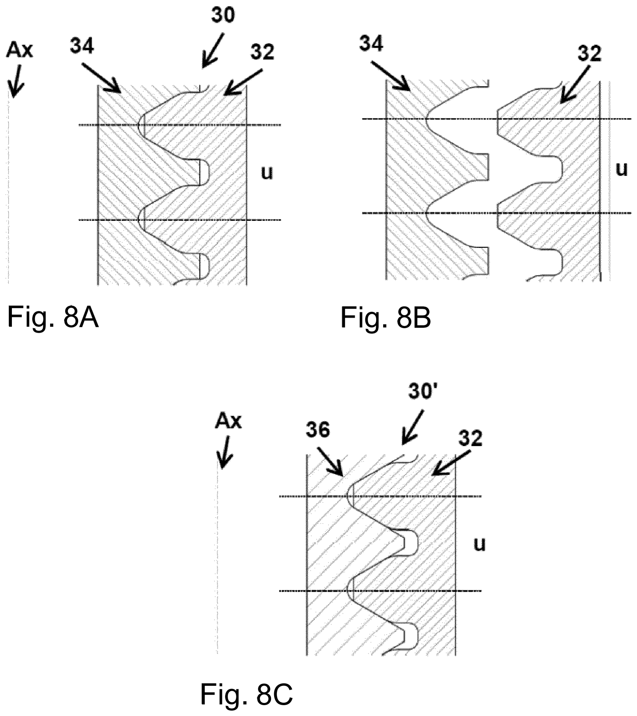

Turning to **Fig. 8A-8C****,** another embodiment of the threaded connection elements, i.e., the connecting portion 104 and the connecting part 204, is described. Reference is made to the above-described embodiments and only differences are described in detail.

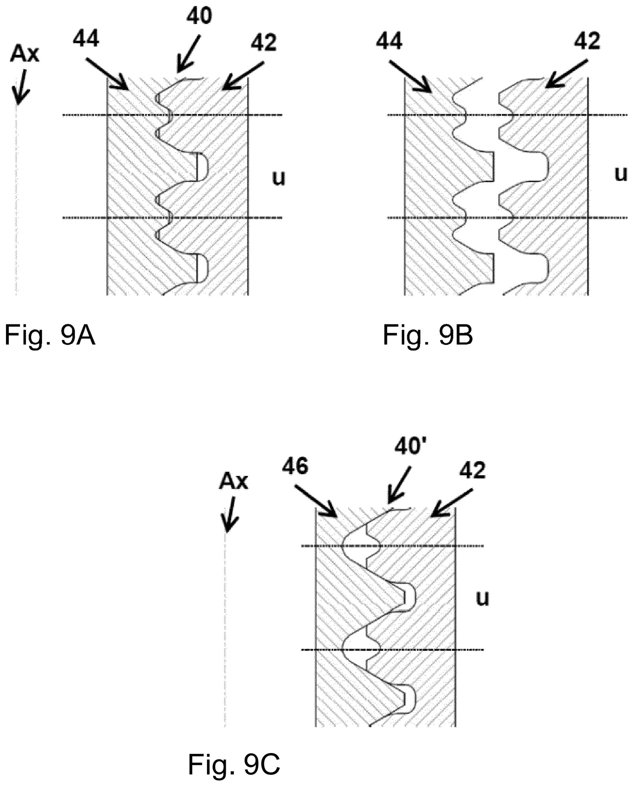

In the case shown in **Fig. 9A-9C****,** the female thread profile 32 is modified from a V-shaped profile such that the root regions are deepened and have an essentially rectangular form. I.e., deepened root regions are arranged between the threads of the female thread profile 32.

In the case of **Fig. 9A****,** an assembly of connected elements 30 is shown. A longitudinal center axis Ax of the screw connection is shown schematically; the relation of lengths and distances are not to scale. The male thread profile 34 has essentially the inverted thread profile as the female thread profile 32, i.e., grooves and threads of the male thread profile 34 are essentially formed as "negative" of the threads and grooves of the female thread profile 34, and only a small gap or no gap is formed between the profiles 32, 34.

Compared to the above-described embodiment, this embodiment has the advantage that an especially high thread profile height is reached as compared to, e.g., standard ISO threads, and also a larger connecting surface between the threads is achieved. This leads to an increased strength of the connection.

Also a higher tightening torque can be reached.

Also, the thread profile allows for more flexible threads. This allows for an increase in service life.

Also, a better clamping force is reached when tightening with the same torque.

In the case of **Fig. 8B****,** the female 32 and male profiles 34 are shown separated from each other. The internal, female thread profile 32 is shown schematically in a front view.

Thus, a standardized female screw profile would not be suited to be screw-connected with the male screw thread profile 34 shown in Fig. 8A and 8B.

In the case of **Fig. 8C****,** another assembly of connected elements 30', i.e., the connecting portion 104 and the connecting part 204, is shown. A longitudinal center axis Ax of the screw connection is shown schematically; the relation of lengths and distances are not to scale. A standardized male thread profile 36 has essentially a V-shaped or ISO metric screw thread profile corresponding to the female thread profile 32, i.e., grooves and threads of the male thread profile 36 are arranged corresponding to threads and grooves of the female thread profile 32. However, due to the modifications of the female screw thread profile 32, gaps are formed between the profiles 32, 36.

Turning to Fig. 9A-9C, another embodiment of the threaded connection elements, i.e., the connecting portion 104 and the connecting part 204, is described. Reference is made to the above-described embodiments and only differences are described in detail.

In the case shown in Fig. 9A-9C, the female thread profile 42 is modified in a way of combining the embodiments of Fig. 5A-5C and 8A-8C. Starting from a V-shaped profile, the root regions are deepened and have an essentially rectangular form, i.e., deepened root regions are arranged between the threads of the female thread profile 42. Also, the female thread profile 42 is modified from a V-shaped profile such that it has an inverted tip, i.e., instead of a flat crest region, an outwardly extending V-shaped cross-section is formed. The resulting cross-section may be understood as a W- or M-shaped thread profile.

In the case of Fig. 9A, an assembly of connected elements 40, i.e., the connecting portion 104 and the connecting part 204, is shown. A longitudinal center axis Ax of the screw connection is shown schematically; the relation of lengths and distances are not to scale. The male thread profile 44 has essentially the inverted thread profile as the female thread profile 42, i.e., grooves and threads of the male thread profile 44 are essentially formed as "negative" of the threads and grooves of the female thread profile 44, and only a small gap or no gap is formed between the profiles 42, 44.

Compared to the above-described embodiment, this embodiment has the advantage that the complex geometry with an inverted thread tip (M- or W-shaped profile) and a protruding thread tip lead to a labyrinth seal against water, pair, oil and air.

Also, a larger height of the thread profile is achieved and the threads have more flexible parts, thus yielding an increase in lifetime.

At the same length of a screw connection, i.e., with the same number of units u with threads and grooves, more connected edges are provided between the threads. This gives a better orientation and connection between the two connecting elements.

In the case of **Fig. 9B****,** the female 42 and male profiles 44 are shown separated from each other. The internal, female thread profile 42 is shown schematically in a front view.

Thus, a standardized female screw profile would not be suited to be screw-connected with the male screw thread profile 44 shown in Fig. 9A and 9B.

In the case of **Fig. 9C****,** another assembly of connected elements 40' is shown. A longitudinal center axis Ax of the screw connection is shown schematically; the relation of lengths and distances are not to scale. A standardized male thread profile 46 has essentially a V-shaped or ISO metric screw thread profile corresponding to the female thread profile 42, i.e., grooves and threads of the male thread profile 46 are arranged corresponding to threads and grooves of the female thread profile 42. However, due to the modifications of the female screw thread profile 42, gaps are formed between the profiles 42, 46.

For all the above-shown and described embodiments, the profiles for male and female screw thread profiles can be inverted. Thus, the connection element, i.e., the connecting portion 104, which has a female screw thread profile in the embodiments, may have a corresponding male screw thread profile, and the connection element, i.e., the connecting part 204, which has a male screw thread profile in the embodiments, may have a corresponding female screw thread profile.

A central idea of the invention, which is embodied by these embodiments, is to provide thread profiles of the multi-start screw threads, which are compatible to standardized, e.g., ISO metric or buttress-type, multi-start threads, while at the same time allowing to provide corresponding multi-start threads, which are themselves not compatible with such standardized multi-start threads.

In particular, the above-described embodiments of the screw threads can be understood as simplified. In addition to these profiles of the multi-start threads, the skilled person will understand that modifications, e.g., with respect to radii of rounded edges, angles and slopes as well as distances and the relation of different parameters may vary. In particular, the parameters may be chosen such that the male and female threads can be easily and securely connected.

### REFERENCE SIGNS

- 1: System (detail); connected elements
- 2: Internal screw thread profile
- 2a: Flank
- 2b: Flank
- 2c: Crest region
- 2d: Root region
- 4: External screw thread profile
- 4a: Flank
- 4b: Flank
- 4c: Crest region
- 4d: Root region
- 10, 20, 30, 40: System (detail); connected elements (unique)
- 10', 20', 30', 40': System (detail); connected elements (standardized)
- 12, 22, 32, 42: Female thread profile
- 14, 24, 34, 44: Male thread profile (unique)
- 16, 26, 36, 46: Male thread profile (standardized)
- 22: Female thread profile
- 22a: Flank
- 22b: Flank
- 22c: Crest region
- 22d: Root region
- 22e: Region
- 24: Male thread profile (unique)
- 26: Male thread profile (standardized)
- 26a: Flank
- 26b: Flank
- 26c: Crest region
- 26d: Root region
- 28: Male thread profile (standardized, buttress threads)
- 28a: Region
- 100: air treatment cartridge
- 102: cartridge body
- 104: connecting portion
- 106: leading end
- 108: trailing end
- 110: multi-start screw thread of air treatment cartridge
- 112: start of thread
- 114: first screw thread
- 116: second screw thread
- 200: air treatment device
- 204: connecting part
- 206: first end
- 208: second end
- 210: multi-start screw thread of air treatment device
- 212, 212*: start of thread
- 214: first screw thread
- 216: second screw thread
- 300: System
- Ax: Axis
- Axᵢₙₜ: Axis
- Axₑₓₜ: Axis
- Ax_{std,1}: Axis
- Ax_{std,2}: Axis
- Arᵢₙₜ: Area (internal/female thread)
- Arₑₓₜ: Area (external/male thread)
- hᵢₙₜ: Thread height
- hₑₓₜ: Thread height
- u: Unit
- wᵢₙₜ: Width
- wₑₓₜ: Width

## Claims

1. An air treatment cartridge (100), especially air dryer cartridge, for an air treatment device (200) for a vehicle, especially utility vehicle, comprising:
a cartridge body (102) having a connecting portion (104) for connecting the air treatment cartridge (100) to the air treatment device (200), the connecting portion (104) being formed on the cartridge body (102) and having a leading end (106), a trailing end (108) opposite to the leading end (106), and a multi-start screw thread (110) formed between the leading end (106) and the trailing end (108),
wherein each start of thread (112) of the multi-start screw thread (110) is offset to one another on the leading end (106) and/or the trailing end (108), and
wherein the screw thread profile (22) has a first (22a) and a second flank (22b) which are asymmetric.

2. The air treatment cartridge (100) according to claim 1,
**characterized in that**
the multi-start screw thread (110) is a female multi-start screw thread.

3. The air treatment cartridge (100) according to claim 1 or 2,
**characterized in that**
the multi-start screw thread (110) comprises a standardized screw thread profile (26) or a screw thread profile (22) having a reduced cross-sectional thread area in relation to a standardized screw thread profile (26).

4. The air treatment cartridge (100) according to claim 3,
**characterized in that**
the standardized screw thread is of an ISO metric or a buttress type.

5. The air treatment cartridge (100) according to claim 3 or 4,
**characterized in that**
the screw thread profile (22) has a first flank (22a), a flat crest region (22c), and a second flank (22b), wherein at least one non-rounded edge is formed between the first (22a) or second flank (22b) and the crest region (22c).

6. The air treatment cartridge (100) according to one of the claims 3 to 5,
**characterized in that**
the screw thread profile (22) has a rounded root region (22d) formed between a first (22a) and second flank (22b).

7. The air treatment cartridge (100) according to one of the claims 3 to 6,
**characterized in that**
the screw thread profile (22) is configured to engage with a screw thread profile (26), in particular an ISO metric male screw thread profile (26), of a multi-start screw thread (210) of the air treatment device (200) such that a non-rounded edge of the screw thread profile (22) of the multi-start screw thread (110) of the air treatment cartridge (100) has a contact point with a flank (26b) of the screw thread profile (26) of the multi-start screw thread (210) of the air treatment device (200).

8. The air treatment cartridge (100) according to one of the claims 3 to 7,
**characterized in that**
the screw thread profile (12) is configured as a modified V-shaped profile, such that it has an inverted crest region, in particular a W- or M-shaped thread profile; and/or the screw thread profile (12) is configured as a modified V-shaped profile, such that it has a broadened and/or deepened groove region.

9. The air treatment cartridge (100) according to one of the claims 3 to 8,
**characterized in that**
the screw thread profile (22) is configured as a modified V-shaped profile, such that one flank has a lower slope than the other flank.

10. The air treatment cartridge (100) according to one of the claims 3 to 9,
**characterized in that**
the screw thread profile (22) is compatible to a standardized male thread profile (26), in particular to an ISO metric screw thread profile and/or a buttress-type thread profile.

11. The air treatment cartridge (100) according to one of the claims 3 to 10,
**characterized in that**
the screw thread profile (22) is configured such that an internal thread height (hint) is larger than an external thread height (hext), in particular an external thread height (hext) of a corresponding standardized male thread profile (26), in particular an ISO metric screw thread profile and/or a buttress-type profile.

12. The air treatment cartridge (100) according to one of the preceding claims,
**characterized in that**
the multi-start screw thread (110) comprises a first screw thread (114) having a first start of thread (112) and a second screw thread (116) having a second start of thread (112), wherein, optionally, the first and the second starts of threads (112) are evenly distributed on the leading end (106) and/or the trailing end (108).

13. An air treatment device (200) for a vehicle, especially utility vehicle, being connectable to an air treatment cartridge (100) according to one of the preceding claims and comprising:
a connecting part (204) for establishing the connection between the air treatment device (200) to the air treatment cartridge (100),
wherein the connecting part (204) has a first end (206), a second end (208) opposite the first end (206), and a multi-start screw thread (210) formed between the first end (206) and the second end (208) and being correspondingly formed to the multi-start screw thread (110) of the air treatment cartridge (100) according to one of the preceding claims, thereby being engageable thereto.

14. A System (300), comprising:
an air treatment device (200) according to claim 13, and
an air treatment cartridge (100) according to one of the claims 1 to 12,
wherein the air treatment device (200) and the air treatment cartridge (100) are connected to each other by their respective multi-start screw threads (110, 210) being engaged to each other.
